# EUROPÄISCHE PATENTSCHRIFT

(11) **EP 3 551 857 B1**
(45) Veröffentlichungstag und Bekanntmachung des Hinweises auf die Patenterteilung: **09.09.2020**
(21) Anmeldenummer: 17811954.1
(22) Anmeldetag: 11.12.2017
(51) Int. Cl.: F01N 3/20, F01N 9/00, F01N 11/00

(54) **VERFAHREN ZUM BETRIEB EINES ELEKTRISCH BEHEIZBAREN KATALYSATORS**
METHOD FOR OPERATING AN ELECTRICALLY HEATED CATALYST
PROCÉDÉ D'OPÉRATION D'UN CATALYSEUR ÉLECTRIQUEMENT CHAUFFÉ

(30) Priorität: 12.12.2016 DE 102016224711
(43) Veröffentlichungstag der Anmeldung: 16.10.2019
(73) Patentinhaber: Vitesco Technologies GmbH, 30165 Hannover (DE)
(72) Erfinder: HIRTH, Peter, 51503 Rösrath (DE); HÄRIG, Thomas, 53819 Neunkirchen- Seelscheid (DE)
(74) Vertreter: Barz, Torsten
(86) Internationale Anmeldenummer: PCT/EP2017/082145
(87) Internationale Veröffentlichungsnummer: WO 2018/108775

(56) Entgegenhaltungen:
- EP-A2- 0 839 996
- EP-A2- 0 839 996
- WO-A1-2015/060014
- WO-A1-2015/060014
- WO-A1-2015/113732
- WO-A1-2015/113732
- US-A1- 2014 366 509
- US-A1- 2014 366 509

## Beschreibung

### Technisches Gebiet

Die Erfindung betrifft ein Verfahren zum Betrieb eines elektrisch beheizbaren Katalysators in einem Abgasstrang eines Verbrennungsmotors mit zumindest einem Wabenkörper, der von einem Abgasstrom durchströmbar ist, und mit zumindest einem dem Wabenkörper in Durchströmungsrichtung des Abgases vorgelagerten elektrisch beheizbaren Heizleiter, wobei durch das Beaufschlagen des Heizleiters mit einem elektrischen Strom eine Aufheizung des Heizleiters erreicht wird.

### Stand der Technik

Für den Einsatz in Abgassträngen von Verbrennungsmotoren werden Abgasnachbehandlungssysteme wie beispielsweise Katalysatoren eingesetzt. Diese benötigen abhängig von ihrem spezifischen Aufbau und den verwendeten Materialien unterschiedliche Temperaturfenster, um für eine optimale Umwandlung des Abgases zu sorgen. Insbesondere zu Beginn des Betriebs des Verbrennungsmotors ist die Temperatur am Katalysator regelmäßig niedriger als die optimale Betriebstemperatur. Um eine möglichst schnelle Aufheizung des Abgases und damit auch den Wabenkörpern des Katalysators zu erreichen sind elektrische Heizsysteme bekannt, die das strömende Abgas erwärmen. Hierzu werden Heizleiter verwendet, die von einem Strom durchflossen werden und unter Ausnutzung des ohmschen Widerstandes aufgeheizt werden.

Heizleiter weisen abhängig von ihrem Aufbau, der Materialwahl und dem jeweils vorliegenden Materialgefüge unterschiedliche veränderliche Widerstandswerte auf. Auch die Temperatur des Heizleiters hat Einfluss auf den tatsächlichen Widerstandswert. Dies führt dazu, dass sich die Heizleistung bei einem gegebenen Stromfluss bei sich verändernden Randbedingungen verändern kann. Durch eine Veränderung des Widerstands eines Heizleiters verändern sich auch die durch den Heizleiter fließenden Ströme, was zu einer Fehlermeldung im elektrischen System eines Kraftfahrzeugs führen kann. Außerdem kann es vorkommen, dass die Stromaufnahme zur Aufheizung auf eine definierte Temperatur größer ist als die zur Verfügung stehende Strommenge, die insbesondere in einem Kraftfahrzeug stark begrenzt ist.

Die EP 0 839 996 A2 offenbart eine Abgasreinigungsvorrichtung mit einem Abgaskanal, wobei der Abgaskanal einen Abgasreinigungskatalysator aufweist und dazu geeignet ist kurzweilig NOx aus dem darin strömenden Abgas zu adsorbieren. Weiterhin weist die Vorrichtung eine Steuereinrichtung für die Katalysatortemperatur auf. Außerdem ist eine Einrichtung zum Ermitteln der Katalysatortemperatur oder zum Schätzen der Katalysatortemperatur auf Basis der Abgastemperatur oder des Motorbetriebszustands vorgesehen. Die Katalysatortemperatur kann abwechselnd und wiederholt angehoben und abgesenkt werden, um NOx aus dem Abgas adsorbiert wird, falls die Katalysatortemperatur fällt, und desorbiert, wenn die Katalysatortemperatur ansteigt. Die Vorrichtung sieht vor, dass die Adsorptionskapazität des Katalysators ein Maximum ist, wenn eine erste untere Grenztemperatur für den Katalysator erreicht ist. Beim Erreichen einer ersten oberen Grenztemperatur ist die Adsorptionskapazität im Wesentlichen Null.

Die US 2014/366509 A1 offenbart ein Verfahren zum Betreiben einer Abgasbehandlungsvorrichtung mit einer Heizung zum Heizen eines Abgasstroms in der Abgasbehandlungsvorrichtung. Zusätzlich ist in der Abgasbehandlungsvorrichtung eine Zufuhrstelle vorgesehen, an welcher ein Additiv in die Abgasbehandlungsvorrichtung zugegeben werden kann.

Die WO 2015/060014 A1 offenbart eine Abgasreinigungsvorrichtung für eine Verbrennungsmaschine, wobei ein NOx Adsorptionsmittel zum Adsorbieren von NOx im Abgas und ein NOx Reinigungskatalysator zum Reinigen von NOx im Abgas in einer Maschinenabgaspassage angeordnet sind, wobei das NOx Adsorptionsmittel die Eigenschaft hat, dass die adsorbierte Feuchtigkeit beginnt, desorbiert zu werden, wenn die Temperatur des NOx Adsorptionsmittels erhöht wird, und wobei die Temperatur des NOx Adsorptionsmittels eine Feuchtigkeitsdesorptionstemperatur erreicht, und dass das adsorbierte NOx beginnt, desorbiert zu werden, wenn die Temperatur des NOx Adsorptionsmittels weiter erhöht wird, und wobei die Temperatur des NOx Adsorptionsmittels eine NOx Desorptionstemperatur erreicht, wobei die Vorrichtung zudem mit einer elektrischen Heizung zum Erhöhen der Temperatur des NOx Adsorptionsmittels ausgestattet ist, und wobei die Vorrichtung beginnt der elektrischen Heizung elektrische Leistung zuzuführen, bevor die Verbrennungsmaschine vollständig aufgewärmt ist, wenn ein Signal, welches ein Anlassen der Verbrennungsmaschine anfragt, ausgegeben wird, und der elektrischen Heizung eine elektrischen Leistungsmenge zuführt, welche die Temperatur des NOx Adsorptionsmittels gleich oder höher der Feuchtigkeitsdesorptionstemperatur, aber niedriger der NOx Desorptionstemperatur einstellt.

Die WO 2015/113732 A1 offenbart ein Verfahren zur Temperatureinstellung einer an eine Brennkraftmaschine angeschlossenen Abgasnachbehandlungseinrichtung umfassend ein elektrisches Heizelement, einen dem Heizelement nachgeschalteten Oxidationskatalysator sowie einen dem Oxidationskatalysator nachgeschalteten SCR-Katalysator, wobei Temperaturwerte für eine aktuelle Temperatur des Oxidationskatalysators und des SCR-Katalysators laufend ermittelt werden, abhängig von den ermittelten Temperaturwerten Einspritzparameter von Einspritzvorgängen für Kraftstoffeinspritzungen in Brennräume der Brennkraftmaschine und eine Heizleistung des Heizelements eingestellt werden, dem Oxidationskatalysator und dem SCR-Katalysator jeweils ein einer vorgebbaren Umsatzschwelle zugeordneter charakteristischer Temperaturwert zugeordnet wird, wobei dem Oxidationskatalysator ein erster charakteristischer Temperaturwert für einen oxidativen Kohlenmonoxidumsatz und ein zweiter charakteristischer Temperaturwert für einen oxidativen Kohlenwasserstoffumsatz und dem SCR-Katalysator ein dritter charakteristischer Temperaturwert für einen reduktiven NOx-Umsatz zugeordnet werden, wobei bei Erreichen des ersten und des zweiten charakteristischen Temperaturwerts für die Temperatur des Oxidationskatalysators und bei Erreichen des dritten charakteristischen Temperaturwerts für die Temperatur des SCR-Katalysators jeweils unterschiedliche Werte für die Einspritzparameter und/oder die Heizleistung eingestellt werden.

Nachteilig an den im Stand der Technik bekannten elektrischen Heizsystemen ist insbesondere, dass es durch den Betrieb des Kraftfahrzeugs beziehungsweise des Verbrennungsmotors zu Veränderungen des Materialgefüges des Heizleiters kommen kann, wodurch dessen Widerstandswert verändert werden kann. Die damit einhergehenden Veränderungen des Widerstandswerts sind nicht hinreichend genau vorhersagbar, so dass es vorkommen kann, dass die Heizleistung des Heizleiters sich in einen Bereich außerhalb der vorgegebenen Grenzen verändert.

### Darstellung der Erfindung, Aufgabe, Lösung, Vorteile

Daher ist es die Aufgabe der vorliegenden Erfindung, ein Verfahren zu schaffen, welches es ermöglicht, die Veränderung des Widerstandswerts eines Heizleiters in einem Abgasstrang zielgerichtet zu erkennen und durch geeignete Gegenmaßnahmen zu begrenzen.

Die Aufgabe hinsichtlich des Verfahrens wird durch ein Verfahren mit den Merkmalen von Anspruch 1 gelöst.

Ein Ausführungsbeispiel der Erfindung betrifft ein Verfahren zum Betrieb eines elektrisch beheizbaren Katalysators in einem Abgasstrang eines Verbrennungsmotors mit zumindest einem Wabenkörper, der von einem Abgasstrom durchströmbar ist, und mit zumindest einem dem Wabenkörper in Durchströmungsrichtung des Abgases vorgelagerten elektrisch beheizbaren Heizleiter, wobei durch das Beaufschlagen des Heizleiters mit einem elektrischen Strom eine Aufheizung des Heizleiters erreicht wird, wobei der Heizleiter abhängig von der Umgebungstemperatur des Heizleiters elektrisch beheizt wird, wobei der Heizleiter derart elektrisch beheizt wird, dass die Verweilzeit der Temperatur des Heizleiters in einem durch eine erste untere Grenztemperatur T_{G1U} und eine obere Grenztemperatur T_{G1O} definierten Temperaturbereich begrenzt ist, wobei der Temperaturtransient der Temperatur des Heizleiters beim Durchlaufen des definierten Temperaturbereichs von einer hohen Temperatur hin zu einer niedrigen Temperatur einen vorgegebenen Grenzwert nicht unterschreitet, um eine Gefügeumwandlung des Heizleiters, insbesondere das Ausbilden der Alpha-Strich-Phase, innerhalb des durch die Grenztemperaturen TG1U und TG1O definierten Temperaturbereichs zu vermeiden.

Die Umgebungstemperatur des Heizleiters wird im unbeheizten Zustand in erster Näherung insbesondere durch die Abgastemperatur des durch den Abgasstrang strömenden Abgases beeinflusst, weswegen die Abgastemperatur und die Umgebungstemperatur des Heizleiters im Wesentlichen identisch oder zumindest sehr ähnlich sind. Dies gilt zumindest solange der Verbrennungsmotor betrieben wird. Nach dem Abschalten des Verbrennungsmotors strömt kein Abgas mehr durch den Abgasstrang, weswegen die Umgebungstemperatur des Heizleiters dann im Wesentlichen durch die noch aufgewärmten Strukturen, wie beispielsweise das Gehäuse des Katalysators, beeinflusst wird. Die Umgebungstemperatur beschreibt die Temperatur in direkter Umgebung des Heizleiters. Mit dieser direkten Umgebung findet der stärksten Wärmeaustausch statt, so dass der Heizleiter in diesen Bereich seine Wärme abgibt, wenn eine elektrische Beheizung stattfindet, und aus dem er Wärme aufnimmt, wenn die Umgebung durch das strömende Abgas auf einem höheren Temperaturniveau ist als der Heizleiter selbst.

Der Heizleiter wird dazu genutzt um das in der Abgasleitung strömende Abgas zu erwärmen, indem es an dem erwärmten Heizleiter vorbeiströmt. Dadurch kann einerseits früher die für den Betrieb des Katalysators optimale Temperatur erreicht werden, andererseits kann durch eine gezielte Temperaturführung des Heizleiters und somit davon abhängig auch des Wabenkörpers und des Abgases eine unerwünschte Gefügeumwandlung des Heizleiters oder des Wabenkörpers vermieden werden.

Konkret geht es hierbei um den Effekt, der sich insbesondere an metallischen Werkstoffen einstellt, wenn diese bestimmten Temperaturen oder Temperaturverläufen ausgesetzt werden. Durch das Aufheizen über eine materialspezifische Mindesttemperatur und das anschließende langsame Abkühlen durch ein vordefiniertes Temperaturfenster hindurch, kann es bei metallischen Werkstoffen zu einer zumindest vorrübergehend bleibenden Veränderung des Materialgefüges kommen. Diese Veränderung des Materialgefüges wirkt sich auch auf den spezifischen ohmschen Widerstand des Materials aus. Eine Veränderung des ohmschen Widerstandes im Vergleich zu dem ursprünglichen durch die Materialwahl und Dimensionierung vorgeplanten ohmschen Widerstand kann dazu führen, dass die Heizleistung des Heizleiters bei einem bekannten elektrischen Strom höher oder niedriger ausfällt als ursprünglich geplant. Da die Grenzen für den zur Verfügung stehenden elektrischen Strom und auch die durch die Aufheizung zu erreichenden Temperaturen vom Kunden sehr genau definiert sind, kann eine solche nicht vorgesehene Gefügeumwandlung dazu führen, dass die Aufheizung außerhalb der von dem Kunden vorgegebenen Grenzen stattfindet. Um ein dauerhaft funktionierendes elektrisches Heizsystem zu schaffen, muss daher die ungewünschte Veränderung des ohmschen Widerstandes des Heizleiters und/oder des Wabenkörpers minimiert oder vorzugsweise gänzlich verhindert werden. Alternativ muss zumindest ein Verfahren vorgesehen werden, welches eine Rückbildung der Gefügeumwandlung ermöglicht, um den Betrieb des elektrischen Heizsystems in den eigentlich vorgesehenen Grenzen zu ermöglichen.

Materialabhängig gibt es ein Temperaturfenster, welches durch eine erste untere Grenztemperatur T_{G1U} und eine obere Grenztemperatur T_{G1O} definiert ist, in welchem die Gefügeumwandlung des jeweiligen Materials stattfindet, wenn das Material zu langsam durch dieses Temperaturfenster geführt wird. Dies ist durch die Prozesse bedingt, die in der Kristallstruktur des Metalls bei einer Temperaturveränderung ablaufen. Im Speziellen geht es hierbei um die Ausbildung der sogenannten Alpha-Strich-Phase.

Die sogenannte Alpha-Strich-Phase ist im Rahmen des Eisen-Kohlenstoff-Diagramms in der Literatur bekannt. Sie ist durch die Ausbildung eines speziellen Metallgefüges charakterisiert. Die Alpha-Strich-Phase führt zu einer Versprödung der ferritischen Phase der Metalllegierung. Die Alpha-Strich-Phase entsteht bevorzugt unterhalb von etwa 500 Grad Celsius. Durch eine erneute Wärmebehandlung kann diese Alpha-Strich-Phase wieder aufgelöst beziehungsweise rückgebildet werden. Die genauen Temperaturbereiche sind hierbei für das jeweils konkret verwendete Material spezifisch. Das Prinzip der Bildung der Alpha-Strich-Phase und der Auflösung ist jedoch allgemein gleich.

Sofern die Temperatur des Materials dieses Temperaturfenster zu langsam durchläuft, kann es zu einer Ausbildung des unvorteilhaften Materialgefüges kommen. Durch ein aktives Beheizen, kann sichergestellt werden, dass das definierte Temperaturfenster nur kurzfristig geschnitten wird oder zumindest die Verweildauer in dem definierten Temperaturfenster ausreichend kurz ist, so dass insbesondere der Temperaturtransient beim Durchlaufen dieses Temperaturfensters ausreichend hoch ist.

Mit einem Temperaturtransienten ist eine zeitliche Veränderung der Temperatur gemeint. Alternativ kann hierfür auch der Begriff eines Temperaturgradienten in der Fachliteratur gefunden werden. Die Veränderlichkeit der Temperatur ist beispielsweise als Veränderung in Kelvin pro Minute [K/min] angegeben und bezieht sich im Wesentlichen auf eine definierte Abkühlung von einem vorgegebenen Temperaturniveau hin zu einem niedrigeren Temperaturniveau.

Vorteilhaft kann das Verfahren bei Materialien und insbesondere bei Stählen angewendet werden, die einen Chromgehalt von ≥ 10 % aufweisen und einen Aluminiumgehalt von ≤ 11 %. Dabei kommen besonders bevorzugt Stähle mit einem Chromgehalt von ≥ 19 % zum Einsatz, wie beispielsweise 1.4410 und 1.4362. Weiterhin kann das Verfahren auch vorteilhaft auf Legierungen angewendet werden, die insbesondere für elektrische Heizleiter verwendet werden. Hierzu zählen beispielsweise die Stähle 1.4765 oder 1.4767 und nahe artverwandte Stähle mit einer ähnlichen Zusammensetzung.
Bei den vorgenannten vorteilhaften Materialien liegt die erste untere Grenztemperatur T_{G1U} bei ungefähr 380 Grad Celsius. Die erste obere Grenztemperatur T_{G1O} liegt hierbei vorzugsweise bei 530 Grad Celsius.

Es ist im Sinne der Erfindung, dass der Temperaturtransient der Temperatur des Heizleiters beim Durchlaufen des definierten Temperaturbereichs von einer hohen Temperatur hin zu einer niedrigen Temperatur einen vorgegebenen Grenzwert nicht unterschreitet.
Dies ist vorteilhaft, da durch das zu lange Verweilen in dem Temperaturfenster beziehungsweise durch das zu langsame Durchlaufen des Temperaturfensters die Gefügeumwandlung und somit die Ausbildung der Alpha-Strich-Phase verursacht werden. Daher ist es besonders vorteilhaft, wenn das definierte Temperaturfenster so rasch wie möglich, mindestens jedoch aber schneller als ein unterer Grenzwert, durchlaufen wird.
Besonders bevorzugt wird bei Parametern für T_{G1U} und T_{G1O}, wie oben genannt, eine Abkühltransient DT/Dt von ≥ 10 K/min angestrebt. Besonders vorteilhaft ist hierbei ein Abkühltransient von ≥ 100 bis 1000 K/min. Dies führt dazu, dass die Abkühlung besonders schnell erfolgt, wodurch das als kritisch anzusehende Temperaturfenster sehr schnell durchlaufen wird und somit keine ausreichende Verweilzeit entsteht, in welcher sich die zu vermeidende Alpha-Strich-Phase ausbilden könnte.

Auch ist es vorteilhaft, wenn die Temperatur des Heizleiters durch das elektrische Beheizen oberhalb der oberen Grenztemperatur T_{G1O} gehalten wird, sofern die Umgebungstemperatur des Heizleiters unterhalb dieser oberen Grenztemperatur T_{G1O} liegt jedoch oberhalb einer zweiten unteren Grenztemperatur T_{G2U} liegt.

Dies ist vorteilhaft, um zu verhindern, dass die Temperatur des Heizleiters aufgrund des kälter werdenden Abgases und damit der kälter werdenden Umgebung des Heizleiters absinkt und in das vordefinierte Temperaturfenster rutscht, in welchem die Gefügeumwandlung, insbesondere die Ausbildung der Alpha-Strich-Phase, beginnt.

Grundsätzlich ist es unvermeidlich, dass die Temperatur des Heizleiters beim Abkühlen des Abgases und der Umgebung des Heizleiters, beispielsweise infolge des Abschaltens des Verbrennungsmotors, durch das kritische Temperaturfenster läuft. Es ist jedoch das Ziel des erfindungsgemäßen Verfahrens, dass die Verweildauer in diesem Temperaturfenster möglichst gering ist beziehungsweise die Abkühlung schnell genug erfolgt, so dass das kritische Temperaturfenster möglichst schnell durchlaufen wird, ohne dass eine Gefügeumwandlung stattfindet.

Bei einem Betriebspunkt mit geringerer Last am Verbrennungsmotor wird weniger Abgas in den Abgasstrang emittiert, wodurch die Temperatur am Heizleiter sinkt. Liegt die neue niedrigere Umgebungstemperatur nun unterhalb der oberen Grenztemperatur T_{G1O} aber oberhalb einer zweiten unteren Grenztemperatur T_{G2U} führt dies dazu, dass der Heizleiter relativ gesehen langsamer abkühlt, als wenn die Umgebungstemperatur beispielsweise unterhalb der zweiten unteren Grenztemperatur T_{G2U} liegen würde. Dadurch wird die Verweildauer in dem kritischen Temperaturfenster verlängert, da der Temperaturtransient der Abkühlung des Heizleiters geringer ist.

Um nun zu verhindern, dass die Temperatur des Heizleiters unnötig lange in dem kritischen Temperaturfenster liegt, beziehungsweise die Abkühlung zu langsam stattfindet, wird bevorzugt der Heizleiter elektrisch aufgeheizt und so auf einem Temperaturniveau oberhalb der oberen Grenztemperatur T_{G1O} gehalten, um die Gefügeumwandlung zu verhindern. Nachdem die Temperatur der Umgebung des Heizleiters ausreichend weit unterhalb eine zweite untere Grenztemperatur T_{G2U} abgesunken ist, kann die elektrische Beheizung deaktiviert werden, da das Delta zwischen der Temperatur des Heizleiters und der Umgebungstemperatur des Heizleiters genügend groß ist, um ein ausreichend schnelles Absinken der Temperatur des Heizleiters durch das kritische Temperaturfenster hindurch zu gewährleisten. Der Temperaturtransient der Abkühlung ist dabei dann genügend hoch, um die Ausbildung der Alpha-Strich-Phase zu verhindern.

Bei den vorgenannten Materialien, wie insbesondere den Stählen 1.4410 und 1.4362 oder artverwandten Stählen mit einem Chromgehalt größer als 10 % oder bevorzugt größer als 19 % und einem Aluminiumgehalt von weniger als 11 %, ist eine zweite untere Grenztemperatur T_{G2U} von ca. 300 Grad Celsius vorteilhaft. Die Temperaturdifferenz zwischen der ersten unteren Grenztemperatur T_{G1U} und der zweiten unteren Grenztemperatur T_{G2U} ist somit ausreichend groß, um bei einer Beendung der Beheizung beim Unterschreiten der zweiten unteren Grenztemperatur T_{G2U} eine ausreichend schnelle Abkühlung und somit einen ausreichend hohen Abkühltransienten zu erreichen.

Ein bevorzugtes Ausführungsbeispiel ist dadurch gekennzeichnet, dass das elektrische Beheizen des Heizleiters beendet wird, wenn die Umgebungstemperatur des Heizleiters die zweite untere Grenztemperatur T_{G2U} unterschritten hat. Dies ist vorteilhaft, um sicherzustellen, dass ein genügend hoher Temperaturtransient erreicht werden kann, so dass die Ausbildung der Alpha-Strich-Phase und somit die den ohmschen Widerstand beeinflussende Veränderung des Metallgefüges verhindert wird.

Auch ist es zu bevorzugen, wenn die zweite untere Grenztemperatur T_{G2U} niedriger ist als die erste untere Grenztemperatur T_{G1U}. Dies ist notwendig damit sichergestellt ist, dass ein genügend hoher Temperaturtransient erreicht wird, um ein ausreichend hohes Temperaturgefälle unter die erste untere Grenztemperatur T_{G1U} zu erreichen.

Darüber hinaus ist es vorteilhaft, wenn der Heizleiter durch das elektrische Beheizen für eine vorgebbare Dauer oberhalb der oberen Grenztemperatur T_{G1O} gehalten wird. Durch das Halten der Temperatur des Heizleiters auf einem hohen Niveau oberhalb der oberen Grenztemperatur T_{G1O} kann die Gefügeumwandlung bei einem zu langsamen Durchlaufen des kritischen Temperaturfensters vermieden werden. Außerdem kann durch das gezielte Erwärmen und Halten der Temperatur auch eine bereits erfolgte Ausbildung der Alpha-Strich-Phase rückgängig gemacht werden, so dass wieder die ursprünglichen Materialeigenschaften erreicht werden.

Weiterhin ist es vorteilhaft, wenn das elektrische Beheizen beendet wird, wenn die Umgebungstemperatur des Heizleiters für eine vordefinierte Zeit unterhalb der zweiten unteren Grenztemperatur T_{G2U} ist. Dies ist vorteilhaft, um sicherzustellen, dass das Beheizen erst dann beendet wird, wenn die Temperatur in der Umgebung des Heizleiters über eine gewisse Mindestdauer unterhalb der zweiten unteren Grenztemperatur T_{G2U} lag. Dadurch wird sichergestellt, dass in jedem Fall ein ausreichend hoher Temperaturtransient beim Abkühlen des Heizleiters durch den kritischen Temperaturbereich hindurch erreicht wird.

Auch ist es zweckmäßig, wenn die elektrische Beheizung des Heizleiters endet, wenn die Temperaturdifferenz zwischen der Umgebung des Heizleiters und der aktuellen Temperatur des Heizleiters einen vorgebbaren Wert übersteigt. Sofern die Temperaturdifferenz zwischen dem Heizleiter und seiner Umgebung genügend groß ist, kann davon ausgegangen werden, dass die Abkühlrate beziehungsweise der Temperaturtransient ausreichend hoch ist, um die Ausbildung der Alpha-Strich-Phase im kritischen Temperaturbereich zu verhindern.

Darüber hinaus ist es vorteilhaft, wenn durch ein Prediktionselement eine Aussage über die zu erwartende Veränderung der Umgebungstemperatur des Heizleiters ausgegeben wird und die elektrische Beheizung des Heizleiters in Abhängigkeit von der durch das Prediktionselement vorhergesagten Änderung der Umgebungstemperatur erfolgt.

Dies ist vorteilhaft, da eine Vorhersage der zu erwartenden Temperaturen am Heizleiter ermöglicht wird, wodurch die Aktivierung und die Deaktivierung der elektrischen Beheizung wirkungsvoller erfolgen können. Beispielsweise könnte das Prediktionselement Daten über den aktuellen und den zukünftige Betriebspunkt des Verbrennungsmotors sammeln, wodurch eine Aussage über die zu erwartende Temperaturentwicklung möglich wäre. Auch ist es vorsehbar, dass das Prediktionselement auf Grundlage von topographischen Daten, beispielsweise aus dem Navigationsgerät, in Verbindung mit der aktuellen Position und der geplanten Fahrroute eine Aussage darüber trifft, wie der Verbrennungsmotor in absehbarere Zukunft betrieben werden wird. Auch hieran kann die Beheizung des Heizelementes vorteilhaft angepasst werden. Erkennt das Prediktionselement beispielsweise eine vorausliegende Steigung, kann darauf geschlossen werden, dass der Verbrennungsmotor mit einer höheren Last betrieben werden wird, wodurch mit steigenden Abgastemperaturen und somit auch mit steigenden Temperaturen am Heizelement beziehungsweise am Wabenkörper des Katalysators zu rechnen ist.

Durch eine Vorhersage der zukünftigen Temperaturentwicklung kann die Entscheidung, ob elektrisch beheizt werden soll oder nicht besser getroffen werden. Eine elektrische Beheizung würde hier beispielsweise keinen Sinn machen, wenn vom Prediktionselement vorhergesagt wird, dass die Temperatur des Abgases und damit der Umgebung des Heizelementes beziehungsweise des Heizelementes selbst ohnehin kurzfristig wieder steigen wird.

Weiterhin ist es zweckmäßig, wenn bei einem zu erwartenden Verbleib der Umgebungstemperatur unterhalb der zweiten unteren Grenztemperatur T_{G2U} die elektrische Beheizung des Heizleiters beendet wird. Dies ist vorteilhaft, da mit einer Gefügeumwandlung nicht zu rechnen ist, wenn die Temperatur unterhalb der zweiten unteren Grenztemperatur T_{G2U} liegt. Eine Beheizung kann jedoch aus anderen Gründen trotzdem jederzeit erfolgen. Sofern zu diesem Zeitpunkt keine Beheizung des Heizelementes stattfinden, wird die Beheizung nicht beendet, sondern bleibt auch weiterhin aus.

Darüber hinaus ist es zu bevorzugen, wenn durch die erste untere Grenztemperatur T_{G1U} und die obere Grenztemperatur T_{G1O} ein Temperaturbereich definiert ist, in welchem das Material des Heizleiters durch die Hitzeeinwirkung eine Umwandlung des Materialgefüges erfährt, die zu einer Veränderung des spezifischen Widerstands des Heizleiters führt. Wie bereits weiter oben beschrieben, kann durch die Ausbildung des Alpha-Strich-Gefüges eine negative Beeinflussung des ohmschen Widerstands des Heizleiters verursacht werden, die die Funktionsfähigkeit beeinträchtigen kann. Die Ausbildung der Alpha-Strich-Phase soll daher weitestgehend vermieden werden beziehungsweise es soll das Alpha-Strich-Gefüge wieder rückgebildet werden, wenn es bereits entstanden ist.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand unter Bezugnahme auf die Zeichnung detailliert erläutert. In der Zeichnung zeigt:

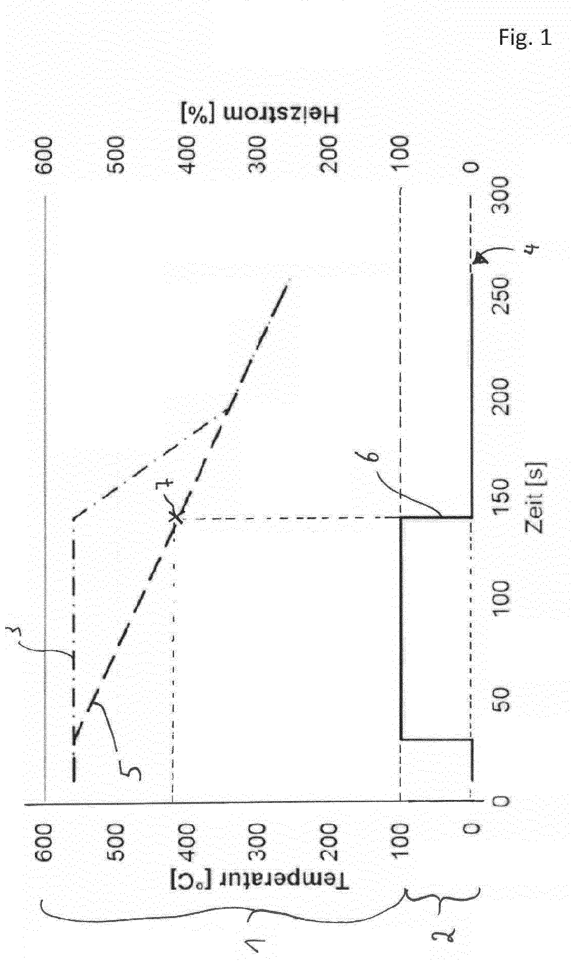

- Fig. 1: ein Diagramm, in welchem im oberen Bereich die Temperatur des Heizleiters über der Zeit dargestellt ist und im unteren Bereich der Heizstrom, welcher durch den Heizleiter geleitet wird, über der Zeit.

### Bevorzugte Ausführung der Erfindung

Die Figur 1 zeigt ein Diagramm, welches in einen oberen Bereich 1 und einen unteren Bereich 2 aufgeteilt ist. Im oberen Bereich 1 ist die Temperatur 3 eines Heizleiters über der Zeit 4, welche entlang der X-Achse aufgetragen ist, dargestellt. Weiterhin ist die Abgastemperatur 5 über der Zeit 4 dargestellt.

Im unteren Bereich 2 des Diagramms ist der an den Heizleiter angelegte Heizstrom 6 über der Zeit 4 dargestellt. Der Heizstrom 6 wird mit dem Wert 0 % dargestellt, wenn kein Strom fließt und mit dem Wert 100 % dargestellt, wenn Strom fließt.

Ausgehend von einer Starttemperatur von ca. 550 Grad Celsius am Heizleiter und dem strömenden Abgas, ist die Beheizung deaktiviert und es fließt kein Strom durch den Heizleiter. Aufgrund beispielsweise einer sinkenden Last am Verbrennungsmotor sinkt im folgenden Zeitverlauf die Abgastemperatur 5 ab. Würde der Heizleiter nun nicht beheizt werden, würde als Konsequenz die Temperatur des Heizleiters entsprechend der Abgastemperatur oder leicht versetzt zu dieser absinken. Aufgrund des niedrigen Temperaturtransienten der Abkühlung, könnte es zu einer Gefügeumwandlung und zur Ausbildung der Alpha-Strich-Phase im Heizleiter kommen.

Um dies zu verhindern, wird die Beheizung des Heizleiters bei ca. 30 Sekunden begonnen, um die Temperatur 3 des Heizleiters auf einem konstant hohen Niveau zu halten und den Eintritt in den Temperaturbereich der Gefügeumwandlung zu vermeiden.

Die Abgastemperatur 5 sinkt unterdessen weiter ungefähr linear ab, wodurch das Temperaturdelta zwischen der Temperatur 3 des Heizleiters und dem Abgas 5 vergrößert wird. Die Beheizung des Heizleiters wird aufrecht erhalten bis die Abgastemperatur auf das Niveau einer unteren Grenztemperatur T_{G2U} 7 abgesunken ist. Ab diesem Zeitpunkt ist das Temperaturdelta zwischen der Temperatur 3 des Heizleiters und der Temperatur 5 des Abgases ausreichend groß, um eine genügend schnelle Abkühlung des Heizleiters zu erreichen, bei der die Ausbildung der Alpha-Strich-Phase verhindert wird.

Im Folgenden beginnt die Temperatur 3 des Heizleiters ebenfalls abzusinken. Wie in Figur 1 gezeigt, sinkt die Temperatur 3 des Heizleiters nach dem Beenden der Beheizung mit einem deutlich höheren Transienten ab als die Abgastemperatur 5. Durch den höheren Transienten der Temperatur 3 des Heizleiters wird erreicht, dass das Temperaturfenster, in welchem die Ausbildung der Alpha-Strich-Phase bevorzugt auftritt, in wesentlich kürzerer Zeit durchlaufen wird als dies bei der Abgastemperatur 5 der Fall ist. Die Ausbildung der Alpha-Strich-Phase im Heizleiter wird somit stark reduziert oder sogar gänzlich vermieden.

Das Diagramm der Figur 1 zeigt eine spezifische Situation, in der eine Beheizung des Heizleiters stattfindet, um ein gewisses Mindesttemperaturniveau zu halten, um nicht in den Temperaturbereich der Gefügeumwandlung zu gelangen. Erst, wenn das Temperaturdelta zwischen der Temperatur des Heizleiters und der Umgebung genügend groß ist, um sicherzustellen, dass ein ausreichend hoher Temperaturtransient bei der Abkühlung erreicht werden kann, wird die Beheizung abgestellt. Die Temperatur des Heizleiters sinkt in der Folge dessen schnell genug ab, um den Temperaturbereich der Gefügeumwandlung zu durchlaufen, ohne tatsächlich eine Gefügeumwandlung zu erfahren.

Der durch die Figur 1 beschriebene Anwendungsfall ist beispielhaft und weist keinen beschränkenden Charakter auf.

## Patentansprüche

1. Verfahren zum Betrieb eines elektrisch beheizbaren Katalysators in einem Abgasstrang eines Verbrennungsmotors mit zumindest einem Wabenkörper, der von einem Abgasstrom durchströmbar ist, und mit zumindest einem dem Wabenkörper in Durchströmungsrichtung des Abgases vorgelagerten elektrisch beheizbaren Heizleiter, wobei durch das Beaufschlagen des Heizleiters mit einem elektrischen Strom eine Aufheizung des Heizleiters erreicht wird, wobei der Heizleiter abhängig von der Umgebungstemperatur des Heizleiters elektrisch beheizt wird, wobei der Heizleiter derart elektrisch beheizt wird, dass die Verweilzeit der Temperatur des Heizleiters in einem durch eine erste untere Grenztemperatur TG1U und eine obere Grenztemperatur TG1O definierten Temperaturbereich begrenzt ist, **dadurch gekennzeichnet, dass** der Temperaturtransient der Temperatur des Heizleiters beim Durchlaufen des definierten Temperaturbereichs von einer hohen Temperatur hin zu einer niedrigen Temperatur einen vorgegebenen Grenzwert nicht unterschreitet, um eine Gefügeumwandlung des Heizleiters, insbesondere das Ausbilden der Alpha-Strich-Phase, innerhalb des durch die Grenztemperaturen TG1U und TG1O definierten Temperaturbereichs zu vermeiden.

2. Verfahren nach einem der vorhergehenden Ansprüche, **dadurch gekennzeichnet, dass** die Temperatur des Heizleiters durch das elektrische Beheizen oberhalb der oberen Grenztemperatur TG1O gehalten wird, sofern die Umgebungstemperatur des Heizleiters unterhalb dieser oberen Grenztemperatur TG1O liegt jedoch oberhalb einer zweiten unteren Grenztemperatur TG2U liegt.

3. Verfahren nach einem der vorhergehenden Ansprüche, **dadurch gekennzeichnet, dass** das elektrische Beheizen des Heizleiters beendet wird, wenn die Umgebungstemperatur des Heizleiters die zweite untere Grenztemperatur TG2U unterschritten hat.

4. Verfahren nach einem der vorhergehenden Ansprüche, **dadurch gekennzeichnet, dass** die zweite untere Grenztemperatur TG2U niedriger ist als die erste untere Grenztemperatur TG1U.

5. Verfahren nach einem der vorhergehenden Ansprüche, **dadurch gekennzeichnet, dass** der Heizleiter durch das elektrische Beheizen für eine vorgebbare Dauer oberhalb der oberen Grenztemperatur TG1O gehalten wird.

6. Verfahren nach Anspruch 5, **dadurch gekennzeichnet, dass** das elektrische Beheizen beendet wird, wenn die Umgebungstemperatur des Heizleiters für eine vordefinierte Zeit unterhalb der zweiten unteren Grenztemperatur TG2U ist.

7. Verfahren nach einem der vorhergehenden Ansprüche, **dadurch gekennzeichnet, dass** die elektrische Beheizung des Heizleiters endet, wenn die Temperaturdifferenz zwischen der Umgebung des Heizleiters und der aktuellen Temperatur des Heizleiters einen vorgebbaren Wert übersteigt.

8. Verfahren nach einem der vorhergehenden Ansprüche, **dadurch gekennzeichnet, dass** durch ein Prediktionselement eine Aussage über die zu erwartende Veränderung der Umgebungstemperatur des Heizleiters ausgegeben wird und die elektrische Beheizung des Heizleiters in Abhängigkeit von der durch das Prediktionselement vorhergesagten Änderung der Umgebungstemperatur des Heizleiters erfolgt.

9. Verfahren nach Anspruch 8, **dadurch gekennzeichnet, dass** bei einem zu erwartenden Verbleib der Umgebungstemperatur des Heizleiters unterhalb der zweiten unteren Grenztemperatur TG2U die elektrische Beheizung des Heizleiters beendet wird.

10. Verfahren nach einem der vorhergehenden Ansprüche, **dadurch gekennzeichnet, dass** durch die erste untere Grenztemperatur TG1U und die obere Grenztemperatur TG1O ein Temperaturbereich definiert ist, in welchem das Material des Heizleiters durch die Hitzeeinwirkung eine Umwandlung des Materialgefüges erfährt, die zu einer Veränderung des spezifischen Widerstands des Heizleiters führt.

## Claims

1. Method for operating an electrically heatable catalytic converter in an exhaust tract of an internal combustion engine having at least one honeycomb body through which an exhaust-gas stream can flow, and having at least one electrically heatable heating conductor positioned upstream of the honeycomb body in a throughflow direction of the exhaust gas, wherein heating of the heating conductor is realized by application of an electrical current to the heating conductor, wherein the heating conductor is electrically heated in a manner dependent on the ambient temperature around the heating conductor, wherein the heating conductor is electrically heated such that the dwell time of the temperature of the heating conductor is bounded in a temperature range defined by a first lower limit temperature TG1U and an upper limit temperature TG10, **characterized in that** the temperature transient of the temperature of the heating conductor when passing through the defined temperature range from a high temperature to a low temperature does not undershoot a predefined limit value, in order to prevent a structure conversion of the heating conductor, in particular the formation of the alpha-prime phase, within the temperature range defined by the limit temperatures TG1U and TG10.

2. Method according to any of the preceding claims, **characterized in that** the temperature of the heating conductor is, by means of the electric heating, kept above the upper limit temperature TG10 if the ambient temperature around the heating conductor lies below said upper limit temperature TG10 but lies above a second lower limit temperature TG2U.

3. Method according to any of the preceding claims, **characterized in that** the electric heating of the heating conductor is ended if the ambient temperature of the heating conductor has undershot the second lower limit temperature TG2U.

4. Method according to any of the preceding claims, **characterized in that** the second lower limit temperature TG2U is lower than the first lower limit temperature TG1U.

5. Method according to any of the preceding claims, **characterized in that** the heating conductor is, by means of the electric heating, kept above the upper limit temperature TG10 for a predefinable duration.

6. Method according to Claim 5, **characterized in that** the electric heating is ended when the ambient temperature around the heating conductor is below the second lower limit temperature TG2U for a predefined time.

7. Method according to any of the preceding claims, **characterized in that** the electric heating of the heating conductor is ended when the temperature difference between the surroundings of the heating conductor and the present temperature of the heating conductor exceeds a predefinable value.

8. Method according to any of the preceding claims, **characterized in that**, by means of a prediction element, a statement regarding the expected change in the ambient temperature around the heating conductor is output, and the electric heating of the heating conductor is performed in a manner dependent on the change of the ambient temperature around the heating conductor as predicted by the prediction element.

9. Method according to Claim 8, **characterized in that**, in the event of the ambient temperature around the heating conductor being expected to remain below the second lower limit temperature TG2U, the electric heating of the heating conductor is ended.

10. Method according to any of the preceding claims, **characterized in that**, by means of the first lower limit temperature TG1U and the upper limit temperature TG10, a temperature range is defined in which, owing to the action of heat, the material of the heating conductor undergoes a conversion of the material structure which leads to a change in the specific resistance of the heating conductor.

## Revendications

1. Procédé pour faire fonctionner un catalyseur pouvant être chauffé électriquement dans une ligne d'échappement d'un moteur à combustion interne, comprenant au moins un corps alvéolaire qui peut être traversé par un courant de gaz d'échappement, et comprenant au moins un conducteur chauffant, pouvant être chauffé électriquement, monté en amont du corps alvéolaire dans le sens d'écoulement des gaz d'échappement, l'alimentation du conducteur chauffant avec un courant électrique permettant d'obtenir un échauffement du conducteur chauffant, le conducteur chauffant étant chauffé électriquement en fonction de la température ambiante du conducteur chauffant, le conducteur chauffant étant chauffé électriquement de telle sorte que le temps de maintien de la température du conducteur chauffant est limité dans une plage de températures définie par une température limite basse TG1U et une température limite haute TG1O, **caractérisé en ce que** la transitoire de température de la température du conducteur chauffant lors de la traversée de la plage de températures d'une température élevée vers une température plus basse ne devient pas inférieure à une valeur limite prédéfinie afin d'éviter une transformation de structure du conducteur chauffant, notamment la formation de la phase alpha prime, à l'intérieur de la plage de températures définie par les températures limites TG1U et TG1O.

2. Procédé selon l'une des revendications précédentes, **caractérisé en ce que** la température du conducteur chauffant est maintenue par le chauffage électrique au-dessus de la température limite haute TG1O, dans la mesure où la température ambiante du conducteur chauffant se trouve au-dessous de cette température limite haute TG1O, mais tout de même au-dessus d'une deuxième température limite basse TG2U.

3. Procédé selon l'une des revendications précédentes, **caractérisé en ce que** le chauffage électrique du conducteur chauffant prend fin lorsque la température ambiante du conducteur chauffant est devenue inférieure à la deuxième température limite basse TG2U.

4. Procédé selon l'une des revendications précédentes, **caractérisé en ce que** la deuxième température limite basse TG2U est plus basse que la première température limite basse TG1U.

5. Procédé selon l'une des revendications précédentes, **caractérisé en ce que** le conducteur chauffant est maintenu par le chauffage électrique au-dessus de la température limite haute TG1O pendant une durée pouvant être prédéfinie.

6. Procédé selon la revendication 5, **caractérisé en ce que** le chauffage électrique prend fin lorsque la température ambiante du conducteur chauffant est inférieure à la deuxième température limite basse TG2U pendant une durée prédéfinie.

7. Procédé selon l'une des revendications précédentes, **caractérisé en ce que** le chauffage électrique du conducteur chauffant se termine lorsque la différence de température entre la température ambiante du conducteur chauffant et la température actuelle du conducteur chauffant devient supérieure à une valeur pouvant être prédéfinie.

8. Procédé selon l'une des revendications précédentes, **caractérisé en ce qu'**une déclaration à propos de la modification à attendre de la température ambiante du conducteur chauffant est délivrée par un élément de prédiction et le chauffage électrique du conducteur chauffant est effectué en fonction de la modification de la température ambiante du conducteur chauffant prédite par l'élément de prédiction.

9. Procédé selon la revendication 8, **caractérisé en ce que** dans le cas d'un maintien à attendre de la température ambiante du conducteur chauffant au-dessous de la deuxième température limite basse TG2U, le chauffage électrique du conducteur chauffant prend fin.

10. Procédé selon l'une des revendications précédentes, **caractérisé en ce qu'**une plage de température est définie par la première température limite basse TG1U et la température limite haute TG1O, dans laquelle le matériau du conducteur chauffant subit une transformation de la structure du matériau sous l'effet de la chaleur, laquelle donne lieu à une modification de la résistance spécifique du conducteur chauffant.
